# EUROPEAN PATENT SPECIFICATION

(11) **EP 3 403 483 B1**
(45) Date of publication and mention of the grant of the patent: **08.07.2020**
(21) Application number: 17171922.2
(22) Date of filing: 19.05.2017
(51) Int. Cl.: A01C 1/04

(54) **SEED SUPPORT COMPRISING A SELF-SUPPORTING FILM**
SAATGUTTRÄGER MIT EINEM SELBSTTRAGENDEN FILM
SUPPORT DE SEMENCE COMPRENANT UN FILM AUTOPORTEUR

(43) Date of publication of application: 21.11.2018
(73) Proprietor: S+dB B.V., 6004 HT Weert (NL)
(72) Inventor: LUB, Franciscus Johannes, 6004 HT Weert (NL); OTTEN, Gerard Lodewijk, 6004 HT Weert (NL)
(74) Representative: Hutchins, Michael Richard

(56) References cited:
- EP-A1- 0 470 524
- WO-A1-00/00007
- JP-A- H04 351 545
- US-A- 2 648 165

## Description

### TECHNICAL FIELD OF THE INVENTION

The invention relates to a seed film for supporting seeds such as grass seeds and vegetable seeds, said seed support comprising a water-soluble biodegradable self-supporting film wherein seeds are distributed in a controlled way, wherein the self-supporting film can be overlaid with a water-soluble biodegradable coating layer and wherein the seed support may further comprise a porous carrier layer. The invention also relates to methods for sowing and growing seeds applying the seed support film of the invention.

### BACKGROUND OF THE INVENTION

Sowing of plant seeds, and growing the desired plants from the seeds, all have their specific challenges with regard to costs and yields.

For centuries, attempts have been made to improve seed germination and early growth of both sprout and root to make plant seeds less dependent on the bio-stresses of nature. For this purpose, among many other methods, seeds are immobilized into or onto seed supporting materials, *i.e*. carrier liners. Said seed carrier comprises one or more layers or sheets of either paper, woven or nonwoven fabrics, plastic films, mulch mats, or combinations hereof. Typically, seeds are fixated onto the (surface of the) carrier material, and seeds are enclosed by a covering sheet. Adhering seeds to the carrier is achieved with an adhesive coating. US patent 2,976,646 provides an example of such a seed carrier liner for grass seeds, comprising a nonwoven material made of cellulose fibers. The applied adhesive in US2,976,646 is carboxy methyl cellulose that bonds the individual fibers and adheres the grass seeds onto the nonwoven material.

In US patent 2,648,165, seeds are enveloped between two layers of adhesive coating with an optional backing, for example cotton or paper pulp, to give improved strength. The seed carrier of US2,648,165 dissolves in water within a few hours.

Current seed carriers suffer from various shortcomings. Many of the carrier product constructions are complicated designs that are difficult to manufacture, also the applied materials are not, typically, high volume, low cost raw materials. Therefore, the extra cost to support seeds is high, creating a commercial barrier that is hard to overcome. In addition, seed carriers by virtue of the combination of their design and applied materials may hamper or even prevent proper seed germination and early plant growth. Carrier materials may inhibit the growth of roots and prevent proper contact between early roots and soil, thereby undermining the growth stage of the seedling. In addition, applied adhesives may prevent germination by being affected by method of drying, by components of the formulation or how adhesive encloses the individual seed. In the current seed carriers, the risk is high that seeds, once the seed carrier is applied onto a soil surface, suffer periods wherein the seeds are too dry and/or too wet, further preventing proper growth of the plant. Furthermore, seeds are often not distributed in properly spaced relationship to each other causing inefficient usage of land and, more worrying, detrimental crowding of plants. Also seeds are not tightly adhered in many occasions, *i.e*. seeds come easily loose of the seed carrier and then it loses the major advantage of delivering an ideal distributed seed bed. Finally, the timing of the disintegration of seed carrier plays an important role preventing weed to compete with the relevant seedlings; when carrier disintegrates or biodegrades too early, weed growth will undermine the seed bed of the seeds on the carrier liner.

Therefore, a need exist for an improved seed carrier addressing several or, ideally, all of the aforementioned short-comings of current seed carriers.

### SUMMARY OF THE INVENTION

A first aspect of the current invention relates to a seed support comprising a self-supporting film for supporting one or more seeds, said self-supporting film comprising:
a) between about 85% and about 99.5% of a first water-based adhesive by weight of the film; and
b) between about 0.5% and about 15% water by weight of the film,
wherein the seed support supports one or more plant seeds by adhesion of said one or more plant seeds to a first major surface of the self-supporting film, and wherein the self-supporting film provided with a coating at the first major surface of the self-supporting film, such that the one or more plant seeds supported at said first major surface of the self-supporting film are wholly enclosed by said self-supporting film and said coating, said coating comprising:
a) between about 85% and about 99.5% of a second water-based adhesive by weight of the coating; and
b) between about 0.5% and about 15% water by weight of the coating.

Preferably, the seeds supported by the seed support of the invention are partially or whole embedded in the self-supporting film. Preferably, the seeds supported by the seed support are grass seeds or vegetable seeds.

In an embodiment the seed support of the invention further comprises a porous carrier layer adhered to the second major surface of the self-supporting film opposite to the first major surface of the self-supporting film with adhered seed(s) thereto, said porous carrier layer preferably selected from spunlace or needle-punched nonwoven based on viscose, cotton or polylactic acid fiber, or a mixture thereof.

A second aspect of the invention relates to a method for sowing a plant seed, comprising the consecutive steps of:
a) providing a seed support of the invention;
b) laying the seed support on top of a prepared soil surface with either the first major surface or the second major surface of the self-supporting film of the seed support facing the soil;
c) wetting the seed support with water such that the seed support adheres to the soil surface; and
d) optionally covering the seed support with a layer of soil.

A third aspect of the invention relates to a further method for sowing a plant seed, comprising the consecutive steps of:
a) providing a seed support of the invention;
b) wetting with water a prepared soil surface selected for sowing the plant seed;
c) laying the seed support on top of the wetted soil surface with either the first major surface or the second major surface of the self-supporting film of the seed support facing the soil, such that the seed support adheres to the wetted soil surface;
d) optionally wetting the seed support with water; and
e) covering the seed support with a layer of soil.

### DEFINITIONS

Unless defined otherwise, all technical and scientific terms used herein have the same conventional meaning as commonly understood by one of ordinary skill in the art to which this invention belongs.

The term "plant biostimulant" has its conventional meaning and here refers to any substance or microorganism applied to plants with the aim to enhance nutrition efficiency, abiotic stress tolerance and/or crop quality traits, regardless of its nutrients content. A plant biostimulant improves the efficiency of plant nutrients, by improving uptake or reducing leaching or both, and a biostimulant may also improve soil structure and the soil's ability to enhance plant and microbial growth, and may improve the plant's ability to resist disease. By extension, plant biostimulants also designate commercial products containing mixtures of such substances and/or microorganisms.

The term "oxygen-based soil microbe stimulant" has its conventional meaning and here refers to a beneficial microbe, including a microbe selected from bacteria, fungi protozoa and nematodes, in the rhizosphere. An oxygen-based soil microbe stimulant can be a fungus for establishing mutualistic symbiosis between said fungus and a plant evolving from a seed. The relationship between e.g. certain grasses and endophytic fungi is a symbiosis and can be mutualistic. When for example grasses are infected with endophytic fungi, they can receive important benefits such as anti-herbivory from insects and vertebrates. A major benefit these fungi can provide is their use as a biological control against predators of *e.g.* grasses. The endophytic fungi also contribute drought tolerance and improved growth of the plant.

The term "biocompatible" has its conventional meaning and here refers to the quality of not having toxic or injurious effects on biological systems.

### DETAILED DESCRIPTION OF THE INVENTION

A first aspect of the current invention relates to a seed support according to claim 1.

Such a seed support of the invention provides a surprisingly efficient solution to many of the shortcomings related to current seed carriers. First, the seed support of the invention has a low weight. A light-weight seed-support, with a relatively small volume, not only reduces costs for stocking in a warehouse, and costs for transportation, but also improves on the ease of handling, *e.g.* during production of the seed film and during application of the seed support film, *i.e*. the 'sowing' of the supported seeds. Second, the seed support of the invention has the supported seeds firmly attached allowing for warehousing and handling and application without the risk for spoiling a substantial amount of the adhered seeds coming loose during such applications. That is to say, the seed support of the invention loses less than 5%, more preferably less than 1%, most preferably less than 0.1% of the supported seeds in the time frame from production of the seed support of the invention up to the application of the seed support onto the surface of soil for the purpose of obtaining the plants from the supported seeds. Third, the seed support of the invention supporting one or more seeds, is applicable on the surface of soil for the purpose of obtaining plants from the supported seeds

In an embodiment a seed support of the invention comprises the plant seeds which are partially or wholly embedded in the film.

It is part of the invention that wholly embedded seeds in the self-supporting film of the seed support of the invention are even better protected from being spoilt by coming loose of the seed support before being germinated at the desired soil surface. Furthermore, wholly embedded seeds are even better protected from drying out during warehousing.

The seed support of the invention comprises a self-supporting film provided with a coating at the first major surface of the self-supporting film, such that the one or more plant seeds supported at said first major surface of the self-supporting film are wholly enclosed by said self-supporting film and said coating, said coating comprising:
a) between about 85% and about 99.5% of a second water-based adhesive by weight of the coating; and
b) between about 0.5% and about 15% water by weight of the coating.

In addition to wholly embedding the supported seeds in the self-supporting film of the seed support of the invention, the first major surface of the self-supporting film is provided with a coating consisting of a second water-based adhesive. Of course, the result of applying a coating according to the invention is further embedding of the seeds in a layer of water-based adhesive.

As stated earlier, it is part of the invention that such wholly embedded seeds are even better protected from being spoilt by coming loose of the seed support before being germinated at the desired soil surface, compared to a seed support of the invention comprising a self-supporting film supporting adhered seeds thereto or seeds partially embedded therein. Furthermore, wholly embedded seeds are even better protected from deteriorating during warehousing and/or are more equally exposed to any additive comprised by the water-based adhesive(s), if any.

In an embodiment in the seed support of the invention the first water-based adhesive of the self-supporting film and/or the second water-based adhesive of the coating is a biodegradable water-based adhesive.

The seed support of the invention is applied on the soil surface. Therefore the seed support of the invention is not harmful to the environment. For the seed support of the invention, by selecting a biodegradable water-based adhesive for the self-supporting film and for the coating, the seed support is not harmful to the environment and also food-approved.

In an embodiment the seed support of the invention comprises the first water-based adhesive of the self-supporting film and/or the second water-based adhesive of the coating selected from a polyvinyl alcohol emulsion, said polyvinyl alcohol emulsion comprising one grade of polyvinyl alcohol or a mixture of grades of polyvinyl alcohol and/or said polyvinyl alcohol emulsion comprising one or more further water-based adhesives such as vinyl acetate, preferably the first water-based adhesive of the self-supporting film and the second water-based adhesive of the coating are both a mixture of vinyl acetate and polyvinyl alcohol. Typically, the first water-based adhesive of the self-supporting film and the second water-based adhesive of the coating are similar or the same formulations, and if this is not the case, the coatings are both water-based adhesives. The selected adhesives for the seed support of the invention guarantee that seeds remain attached for an extended period of time, *i.e.* a time period of months up to at least a year.

In an embodiment of the invention the seed support comprises a first water-based adhesive of the self-supporting film and/or a second water-based adhesive of the coating, wherein preferably both adhesives are water-soluble. Specifically suitable are a first water-based adhesive of the self-supporting film and/or a second water-based adhesive of the coating selected from the broad range of polyvinyl alcohol (PVOH) emulsions, either just one grade, a mixture of grades or in combination with other water-based adhesives. According to the invention, the self-supporting film and the coating dissolve in water in a time period between about several hours to four weeks, preferably about three days to three weeks, more preferably about five days to two weeks, most preferably in about one week to 10 days, once the seed support of the invention is applied on the surface of soil for the purpose of growing plants from the seeds supported by the self-supporting film of said seed support. With such a time period for dissolving, or disintegrating, the adhesives of the self-supporting film and, if present, the coating, seeds remain fixed in the adhesive and at the surface of the soil for a time period adequate for germination and rooting, while the risk for blowing or flushing the seeds away by wind or water, respectively, is diminished in said time period. Once the adhesives are dissolved, the germinated seed is adequately fixed in the soil by the roots of the plant.

An important benefit of the application of a water-based and water-soluble adhesive for the self-supporting film of the seed support of the invention and for the coating in the seed support of the invention, is the property of the adhesive to become 'tacky' again once wetted with water. Upon wetting the self-supporting film, said film either or not provided with the coating, the seed support of the invention, with the proper type and size of carrier liner, adapts to the surface contours of the surface at which the seed support is applied. Herewith, the seed support of the invention is applicable on both smooth surfaces and more uneven surfaces whereby the seed support adapts to the surface area upon wetting. A tightly connected seed support to the *e.g.* soil surface is thus obtainable. This way, germinating and root forming seeds and plants are in close distance from the soil surface. Displacement or damaging of seeds or even the complete seed support by moisture and/or wind entering an area between the soil surface and the seed support is adequately prevented by the tight and close adherence of the seed support to the surface.

In an embodiment of the invention the a seed support comprises a self-supporting film and/or a coating, comprising between 0% and about 10% of at least one additive by weight of the self-supporting film and/or by weight of the coating.

In an embodiment of the invention the seed support comprises at least one additive, wherein said at least one additive is a plant growth additive, soil-adjustment additive, extender and/or seed protection additive selected from: bio-stimulants such as humic acid, fulvic acid, nitrogen containing compounds, inorganic compounds, seaweed extracts, botanicals, chitosan, biopolymers, fungi, bacteria, organic or synthetic fertilizers, biocontrol agents, pesticides, *i.e*. herbicides, fungicides and insecticides, a pH-modifier, a UV-stabiliser, an absorbent polymer such as silica, bentonite and super absorbing polymer, calcium carbonate, talcum, color dyes

Preferably, the at least one additive is selected from bio-stimulants - humic and fulvic acids, nitrogen containing and inorganic compounds, seaweed extracts and botanicals, chitosan and biopolymers, beneficial fungi and bacteria -, organic or synthetic fertilizers, biocontrol agents and/or pesticides; herbicides, fungicides and insecticides; additives selected to adjust the growth circumstance wherein the seed is sown, like pH-modifiers, UV-stabilisers, absorbent polymers like silica or SAPs; other additives selected from the many type of extenders like calcium carbonate and talcum to lower raw materials cost, and additives to adjust the quality and appearance of the coating like color dyes.

By implying up to about 10% of one or more additives by weight of the self-supporting film and/or by weight of the coating in the seed support of the invention, the specifications of the seed support of the invention are adjustable to the specific needs of the supported seeds during the circumstances while germinating, rooting, growing, etc. For example, a plant biostimulant and/or a fertilizer are incorporated in the water-based adhesive of the self-supporting film and/or of the coating. Surface area coverage by the plants grown from the seeds supported by the seed support of the invention, and/or amount and quality of established roots are increased by application of the plant biostimulant and the fertilizer. Of course, by choosing the appropriate one or more additives, the seeds supported by the seed support of the invention are aided in their germination and subsequently the plant is aided in its rooting and growth.

In an embodiment of the invention the seed support comprises at least one, wherein the additive is a color dye or another colorant additive for coloring the self-supporting film and/or the coating. By coloring the self-supporting film and/or the coating, germination temperature at the surface of the seed support is controllable and therewith for example the rate of water evaporation, temperature of the germinating seeds, temperature of the soil surface, etc., once the seed support is applied on the soil surface.

In an embodiment of the invention the a seed support comprises a self-supporting film, or a self-supporting film and a coating, wherein the thickness of the self-supporting film or of the self-supporting film and the coating together, is between about 20 micrometer and about 500 micrometer, preferably between about 25 micrometer and about 200 micrometer, more preferably between about 30 micrometer and about 80 micrometer. Preferably, according to the invention, the thickness of the self-supporting film or of the self-supporting film and the coating together, is between about 20 micrometer and about 500 micrometer, preferably between about 25 micrometer and about 100 micrometer, more preferably between about 30 micrometer and about 50 micrometer

As said before, seeds supported by the self-supporting film of the seed support of the invention are adhered to and fixed on the self-supporting film wherein the seeds are partially or even wholly embedded in the water-based adhesive. Therefore, the thickness of the self-supporting film on its own, or the self-supporting film and the additional coating layer together, at least have the thickness of the seeds supported in the seed support. Typically, therefore, the thickness of the seed support, *i.e.* thickness of the self-supporting film on its own, or the self-supporting film and the coating layer together, is at least about 50 micrometer, preferably about 100 micrometer, most preferably less than about 80 micrometer, dependent on the dimensions of the supported seeds. The thickness of the seed support, *i.e.* the thickness of the self-supporting film, or the self-supporting film and the coating layer together, thus relates to the dimension of the seeds supported by the seed support of the invention. For example, when rye grass seeds are supported by a self-supporting film in a seed support of the invention, said thickness is about 80 micrometer, (See the Examples section). For example, when fescue grass seeds are supported by a self-supporting film in a seed support of the invention, said thickness is about 60 micrometer, (See the Examples section). The total weight of the seed support of the invention is kept at a minimum by applying layers of water-based adhesive for the self-supporting film and the coating layer that are as thin as possible, while still firmly fixing the seeds in the seed support. In addition, with the aforementioned thicknesses of the water-based adhesive(s) related to the dimension of the supported seed, the seed is optimally protected from getting loose from the seed support, while the seed is able to germinate and root unhindered by the layer of water-based adhesive(s).

In an embodiment of the invention the seed support comprises a self-supporting film comprising at least 98% of the first water-based adhesive by weight of the film, preferably at least 99%, and/or the coating comprises at least 98% of the second water-based adhesive by weight of the coating, preferably at least 99%.

In an embodiment of the invention the seed support comprises a self-supporting film, said film supporting one or more plant seeds selected from any of a grass, a vegetable, a flower, a beet, a rice, a maize, a cereal, an oil crop, a fiber plant, a member of the laurel family, a member of the marrow family, a member of the banana family, and a latex plant, and any combinations thereof.

In an embodiment of the invention the seed support comprises a self-supporting film, wherein the one or more seeds supported by the self-supporting film is grass seed or vegetable seed.

In an embodiment of the invention the seed support comprises a self-supporting film, wherein the self-supporting film supports one or more grass seeds selected from a rye grass, a fescue grass, a turf grass, Bent grass, Kentucky Blue grass, Rough Blue grass, Red Fescue, Annual Rye grass, Perennial Rye grass, Tall Fescue, Thermal Blue, Zoysia grass, Bahia, Bermuda grass, Buffalo grass, Carpet grass, Centipede, St. Augustine grass, Dwarf Rye grass, Turf Rye grass and slender creeping Red Fescue, and any combinations thereof, preferably the grass seeds are seeds of a rye grass or seeds of a fescue grass.

Virtually any type of plant seed is applicably for adhering to or embedding in the seed support of the invention. Particularly suitable are grass seeds for supporting by the self-supporting film of the seed support of the invention. The various tests with series of different combinations of types of grass seeds, varying first water-based adhesives for the self-supporting film, and if a coating was applied, various second water-based adhesives for the coating, provided for at least the same plant quality with regard to number and density of roots and surface area coverage by the grass after a standardized period of growth from the moment of application of the seed support on the soil surface, and in many occasions improved plant quality, when compared to plant quality obtained with seeds sown in a conventional manner recommended by commercial suppliers of said grass seeds.

See also the Examples section. Seeds applied with the seed support of the invention adhered to the soil surface for a sufficiently long period of time up to germination and development of roots adequate for fixing the developing plant in the soil. In addition, seeds applied with the seed support of the invention were not blown away by the wind in open air field trials, and in addition were not flushed away upon natural rainfall.

In an embodiment of the invention the seed support comprises seeds, wherein the surface density of the seeds is on average between about 10 and 200.000 seeds per square meter of the self-supporting film, preferably between about 20 and about 100.000 seeds per square meter, more preferably between about 40 and about 30.000 seeds per square meter, most preferably between about 80 and about 20.000 seeds per square meter of the self-supporting film, or wherein the surface density of the seeds is on average between about 5 and about 60 gram of seeds per square meter of the self-supporting film, preferably between about 10 and about 50 gram of seeds per square meter, more preferably between about 15 and about 40 gram of seeds per square meter of the self-supporting film. Particularly preferred according to the invention is the seed support comprising seeds, wherein the surface density of the seeds is on average between about 50 and 200.00 seeds per square meter of the self-supporting film, or wherein the surface density of the seeds is on average between about 5 and about 60 gram of seeds per square meter of the self-supporting film

One of the many benefits of the seed support of the invention is the possibility to adjust the density of supported seeds to the needs of the user of the seed support. Seeds are either adhered onto and/or embedded into the self-supporting film of the seed support of the invention in random fashion, *i.e.* a random distribution, or the seeds are provided at preselected positions of the seed support, such as a linear distribution. For example, seeds of a vegetable are positioned at preselected standard distance from each other in rows in the seed support, with parallel rows at preselected standard distance from each other. For example, seeds of flowers are positioned at equal distances from each other at a surface density of about 100 seeds per square meter seed support. For example, grass seeds are applied randomly at substantially equal surface density over the whole surface area of the self-supporting film.

Particularly good results with regard to grass quality and grass leaf soil surface coverage are obtained when grass seeds are randomly and substantially equally distributed at the seed support at between about 20 and about 40 gram of grass seeds per square meter of seed support.

In an embodiment of the invention the seed support comprises a first water-based adhesive and/or a second water-based adhesive being a mixture of one grade of polyvinyl alcohol (PVOH) and a slower water soluble, water-based binder resin, wherein the self-supporting film supports grass seeds at a seed density of about 13.000 seeds per square meter, and wherein the self-supporting film or the self-supporting film with the coating together has a thickness of between about 30 micrometer and about 60 micrometer. In a particularly preferred embodiment of the invention the seed support comprises a first water-based adhesive and/or a second water-based adhesive being a mixture of polyvinyl alcohol and a further water-based adhesive, wherein the self-supporting film supports grass seeds at a seed density of about 13.000 seeds per square meter, and wherein the self-supporting film or the self-supporting film with the coating together has a thickness of between about 30 micrometer and about 60 micrometer

In an embodiment of the invention the seed support comprises a first water-based adhesive and/or a second water-based adhesive being a mixture of one grade of polyvinyl alcohol (PVOH) and a slower water soluble, water-based binder resin, wherein the self-supporting film supports onion seeds at a seed density of about 100 seeds per square meter, and wherein the self-supporting film or the self-supporting film with the coating together has a thickness of between about 30 micrometer and about 60 micrometer.

The term "slower water soluble" has its standard meaning and here refers to a resin that dissolves in water at a slower rate than the selected PVOH, for the purpose of providing the seed support of the invention.

In an embodiment of the invention the seed support of the invention further comprises a porous carrier layer, *i.e.* a layer with extra functionalities, adhered to the second major surface of the self-supporting film opposite to the first major surface of the self-supporting film with adhered seed(s) thereto. Preferably, the porous carrier layer in the seed support of the invention is selected from spunlace or needle-punched nonwoven based on viscose, cotton or polylactic acid fiber, or a mixture thereof.

Application of a porous carrier layer is beneficial for several applications of the seed support of the invention. Of course, the self-supporting film of the seed support of the invention, and the coating if present, are better protected against damage by mechanical stress, e.g. during warehousing, transportation, application on the soil surface and during the period of germination of the seeds and rooting of the plants shortly after application of the seed support on the soil surface. Furthermore, the porous carrier layer serves as a medium for controlling moisture management to the benefit of the optimal moisture content surrounding the germinating seeds and the establishment of roots. Such porous carrier layer is also a medium for preventing weed seed that is located under the carrier to properly germinate. Biodegradation of the material of the porous carrier layer while seeds are germinating and plants are rooting and growing provides for a supply of nutrients to the benefit of said growing plant, seed.

In an embodiment of the invention the seed support further comprises a porous carrier layer, wherein said porous carrier layer is selected from a sheet of woven or nonwoven fabric, produced from natural fibers like cotton, viscose, flax or synthetic fibers like polyester (PET), polypropylene (PP), polyethylene (PE) or a polyolefin blends, polylactic acid (PLA), from paper, typically a type of tissue paper, from cardboard, or from some sort of film or foil material.

In an embodiment of the invention the seed support further comprises a porous carrier layer, wherein said porous carrier layer is made of a material or combination of materials and/or wherein the porous carrier layer is made of a material or combination of materials that is biodegradable and/or biocompatible, preferably the porous carrier layer is made of a flexible material or combination of materials that is/are biodegradable and biocompatible.

In an embodiment of the invention the seed support further comprises a porous carrier layer, wherein said porous carrier layer preferably is selected from a spunlace or needle-punched nonwoven fabric based on fibers from either viscose, cotton, a mixture of aforementioned cellulose fibers or polylactic acid (PLA).

Particularly good results with regard to rooting and achieved surface area coverage of the plants established from seeds supported by a seed support of the invention, said seed support comprising a porous carrier layer, once the seed support was left on a soil surface for a few weeks, are obtainable when the selected porous carrier layer is made of cotton, viscose or aforementioned cellulose fibers or polylactic acid (PLA). Said materials are biocompatible, biodegradable and biodegrade in a time span of a few weeks, such that the seed support of the invention comprising such a porous carrier layer does not prevent the growth of plants, *e.g.* grass such as rye grass or fescue grass, at all.

In an embodiment of the invention the seed support is rolled up for more convenient handling and transportation, *i.e.* made into a roll-good. In an embodiment of the invention the seed support is wrappable in a roll.

For warehousing and stock piling purposes, amongst others, it is very beneficial that the seed support of the invention can be rolled up at a size beneficial for space efficient stock piling, without damaging the seed support, without supported seeds getting loose from the seed support. Typically, inner diameters of such roll-goods of seed support of the invention is between about 5 cm and about 30 cm. This way, and due to the low weight of the seed support of the invention, up to tens of meters, even one or several hundreds of meters of seed support can be wind up easily, and the low weight of a wrapped seed support of the invention contributes to a large extent to adequate storage, transportation, and easy application on the soil surface by unwinding the seed support roll-goods of the invention.

A second aspect of the invention is a method for sowing a plant seed, comprising the consecutive steps of:
a) providing a seed support of the invention;
b) laying the seed support on top of a prepared soil surface with either the first major surface or the second major surface of the self-supporting film of the seed support facing the soil;
c) wetting the seed support with water such that the seed support adheres to the soil surface; and
d) optionally covering the seed support with a layer of soil.

A third aspect of the invention relates to a further method for sowing a plant seed, comprising the consecutive steps of:
a) providing a seed support of of the invention;
b) wetting with water a prepared soil surface selected for sowing the plant seed;
c) laying the seed support on top of the wetted soil surface with either the first major surface or the second major surface of the self-supporting film of the seed support facing the soil, such that the seed support adheres to the wetted soil surface;
d) optionally wetting the seed support with water; and
e) covering the seed support with a layer of soil.

The present invention will be illustrated further by means of the following non-limiting Examples.

### EXAMPLES

### Example 1

### Seed support supporting fescue grass seeds

A seed support for supporting seeds according to the invention was made, wherein the seed support supports grass seeds by adhesion of said one or more grass seeds to a first major surface of the self-supporting film.

The grass seeds were seeds of fescue grass. The water-based adhesive was polyvinyl alcohol (PVOH). The density of the seeds was about 100 seeds per square meter of self-supporting film for a first seed support of example 1 and about 13.000 per square meter of self-supporting film for a second seed support of example 1, corresponding to about 20 to 40 grams of fescue grass seeds per square meter.

The thickness of the self-supporting film was about 30 micrometer. The grass seeds were partially embedded in the self-supporting film.

In a third and fourth seed support of example 1, the self-supporting polyvinyl alcohol (PVOH) film comprising the grass seeds outlined in the first and second seed support of example 1 was overlaid with a coating comprising between about 85% and about 99.5% polyvinyl alcohol (PVOH). The thickness of these seed supports having a self-supporting film together with a coating was about 30 micrometer.

The seed supports of example 1 were rolled up, wherein the various rolls that were made had an approximate inner diameter of between about 6 cm and about 20 cm.

The seeds of example 1 were firmly adhered to the seed support, allowing storage in a warehouse, transportation, packaging, winding in a role, etc., without seeds coming loose from the seed support.

### Example 2

### Seed support supporting rye grass seeds

A seed support for supporting seeds according to the invention was made, wherein the seed support supports grass seeds by adhesion of said one or more grass seeds to a first major surface of the self-supporting film.

The grass seeds were seeds of rye grass. The water-based adhesive was biodegradable polyvinyl alcohol (PVOH). The density of the seeds was about 100 seeds per square meter of self-supporting film for a first seed support of example 2 and about 13.000 per square meter of self-supporting film for a second seed support of example 2, corresponding to about 20 to 40 grams of rye grass seeds per square meter.

The thickness of the self-supporting film was about 50 micrometer. The grass seeds were partially embedded in the self-supporting film.

In a third and fourth seed support of example 2, the self-supporting polyvinyl alcohol (PVOH) film comprising the grass seeds outlined in the first and second seed support of example 2 was overlaid with a coating comprising between about 85% and about 99.5% polyvinyl alcohol (PVOH). The thickness of these seed supports having a self-supporting film together with a coating was about 50 micrometer.

The seed supports of example 2 were rolled up, wherein the various rolls that were made had an approximate inner diameter of between about 6 cm and about 20 cm.

The seeds of example 2 were firmly adhered to the seed support, allowing storage in a warehouse, transportation, packaging, winding in a role, etc., without seeds coming loose from the seed support.

### Example 3

### Seed support supporting fescue grass seeds - PVA-vinyl acetate film

A seed support for supporting seeds according to the invention was made wherein the seed support supports grass seeds by adhesion of said one or more grass seeds to a first major surface of the self-supporting film.

The grass seeds were seeds of fescue grass. The water-based adhesive was a biodegradable mixture of 10% vinyl acetate and 90% polyvinyl alcohol (PVOH) by dry weight of the water-based adhesive. The density of the seeds was about 100 seeds per square meter of self-supporting film for a first seed support of example 3 and about 13.000 per square meter of self-supporting film for a second seed support of example 3, corresponding to about 20 to 40 grams of fescue grass seeds per square meter.

The thickness of the self-supporting film was about 30 micrometer. The grass seeds were partially embedded in the self-supporting film.

In a third and fourth seed support of example 3, the self-supporting film made of a mixture of 10% vinyl acetate and 90% polyvinyl alcohol (PVOH) by dry weight of the water-based adhesive, comprising the grass seeds outlined in the first and second seed support of example 3 was overlaid with a coating comprising between about 85% and about 99.5% of a mixture of vinyl acetate and polyvinyl alcohol (PVOH). The thickness of these seed supports having a self-supporting film together with a coating was about 30 micrometer.

The seed supports of example 3 were rolled up, wherein the various rolls that were made had an approximate inner diameter of between about 6 cm and about 20 cm.

The seeds of example 3 were firmly adhered to the seed support, allowing storage in a warehouse, transportation, packaging, winding in a role, etc., without seeds coming loose from the seed support.

### Example 4

### Seed support supporting rye grass seeds - PVA-vinyl acetate film

A seed support for supporting seeds according to the invention was made, wherein the seed support supports grass seeds by adhesion of said one or more grass seeds to a first major surface of the self-supporting film.

The grass seeds were seeds of rye grass. The water-based adhesive was a biodegradable mixture of vinyl acetate and polyvinyl alcohol (PVOH). The density of the seeds was about 100 seeds per square meter of self-supporting film for a first seed support of example 4 and about 13.000 per square meter of self-supporting film for a second seed support of example 4, corresponding to about 20 to 40 grams of rye grass seeds per square meter.

The thickness of the self-supporting film was about 50 micrometer. The grass seeds were partially embedded in the self-supporting film.

In a third and fourth seed support of example 4, the self-supporting film made of a mixture of vinyl acetate and polyvinyl alcohol (PVOH), comprising the grass seeds outlined in the first and second seed support of example 4 was overlaid with a coating comprising between about 85% and about 99.5% of a mixture of vinyl acetate and polyvinyl alcohol (PVOH). The thickness of these seed supports having a self-supporting film together with a coating was about 50 micrometer.

The seed supports of example 4 were rolled up, wherein the various rolls that were made had an approximate inner diameter of between about 6 cm and about 20 cm.

The seeds of example 4 were firmly adhered to the seed support, allowing storage in a warehouse, transportation, packaging, winding in a role, etc., without seeds coming loose from the seed support.

### Example 5

### Seed support comprising a porous carrier layer

Seed supports as outlined in the aforementioned Examples 1-4 were made and subsequently provided with a porous carrier layer.

The porous carrier layers were a biocompatible and biodegradable woven product or nonwoven product. The porous carrier layers were water porous layers. The porous carrier layers had an open structure such that roots of the grass could penetrate said layers. Porous carrier layers having various thicknesses were applied. The length to complete biodegradation of the various porous carrier layers tested varied. For example, a tested porous carrier layer made of polylactic acid (PLA) biodegraded relatively slow.

The following porous carrier layers were applied with the seed supports for supporting seeds of Examples 1-4:
- spunlace viscose and cotton and
- polylactic acid (PLA) fiber.

The 100% viscose fiber was bonded in a spunlace nonwoven, finely apertured, 50 gram per square meter, thickness about 0,60 mm (Jacob Holm, product specifications of 9 June 2015 - version 00).

The three tested porous carrier layers were flexible. The three tested porous carrier layers were biodegradable and were biocompatible.

The seed supports of example 5 were rolled up, wherein the various rolls that were made had an approximate inner diameter of between about 7 cm and about 30 cm.

The seeds of example 5 were firmly adhered to the seed support, allowing storage in a warehouse, transportation, packaging, winding in a role, etc., without seeds coming loose from the seed support.

### Example 6

### Field tests with seed supports supporting grass seeds

The various seed supports supporting either rye grass seeds, or fescue grass seeds, as listed in Examples 1-5 were tested for their ability to facilitate and promote the germination of the seeds and the growth of the grass.

In the tests, seed supports were either applied within a few days after said seed supports were made, or seed supports were first stored for between about a month and about a year in a dark warehouse at a temperature of about room temperature or 5-10°C lower.

In the tests, the grass seeds were either seeded conventionally for reference / control purposes, according to the standard recommendations of the commercial supplier, or the grass seeds were first applied in the seed supports as described in the aforementioned Examples 1-5, before the application of the seed support. In the tests, the seed supports of Examples 1-5 were laid on top of a soil surface. The seed supports comprising a porous carrier layer were laid on top of the soil surface with the porous carrier layer in close contact with the soil (upper side of the self-supporting film or of the coating provided thereon is facing the air). The reference grass seeds that were seeded conventionally as a control, were seeded in the same soil, in close proximity of the seed supports, for comparison purposes.

Field tests were performed in open air or in a green house, in the period March-October, in The Netherlands.

Germination and growth of the rye grass or the fescue grass was followed in time. Grass density and growth velocity were followed in time and compared between the seed supports of the invention and the conventionally seeded grass.

The seed supports of Example 3 and 4 proved to be more flexible than the seed supports of Example 1 and 2.

### Results

Storage for months to up to a year of various seed supports of the invention did not have an influence on time to germination, grass growth rate and on achievement of a final grass root density and grass leaf density (grass surface coverage), when compared to these parameter values for the similar seed supports of the invention that were tested shortly after preparation of the seed supports.

For the seed supports of Example 5, the porous carrier layer disintegrated in about 3 weeks after the start of the tests and fully biodegraded in about 12 weeks. The self-supporting film and the coating, if present, of the seed supports fully dissolved in the water applied to the seed supports during the time course of the tests. Dissolving the self-supporting film and the coating, if present, took on average three to seven days.

Similar results were obtained with the various seed supports of Examples 1-5 when compared with the conventionally sown grass seeds.

### Example 7

### Field tests with seed supports comprising a porous carrier layer

Seed supports comprising a porous carrier layer and supporting grass seeds, as outlined in Example 5, were laid on (wetted) soil surface. For comparison, grass seeds from the same batches of seed were sown in soil of the same soil batch, according to the standard sowing recommendations provided by the manufacturer.

Grass seeds tested were *Super Over Seeding* (SOS), *Regenerating Perennial Ryegrass* (RPR) and *Shadow* (Grass seed grades from Barenbrug, The Netherlands).

Growth and development of the grass roots was followed in time for seven weeks.

At five regular time intervals after sowing, total root mass was assessed. From the tests it was apparent that the three grasses tested rooted similarly when sown using the standard sowing recommendations or when applied as a seed support supporting the grass seeds.

Separately, the growth in the shadow was compared for five weeks between the grass seeds provided on the seed supports of the invention and the conventionally seeded grass seeds. After a time period of growth, surface area covered by the grasses was assessed. Under influence of growing in the shadow, the surface area covered with any of the seed supports comprising a porous carrier layer of the invention, was fully covered with grass leafs, whereas the surface area of the soil in which grass seeds were sown conventionally was covered with grass leafs for 50% at best.

In parallel with the growth test in the shadow, the growth test was duplicated under regular sunny conditions, providing similar results.

In a further experiment, the self-supporting film of the seed support comprising a porous carrier layer was provided with either a fertilizer, or a plant bio-stimulant, or both a fertilizer and a plant bio-stimulant. Surface coverage and dry weight after five weeks of growth was compared with the surface coverage and dry weight obtained with the grass seeds that were sown applying the conventional approach and with the seed support without the fertilizer and without the plant bio-stimulant.

Under influence of the fertilizer and/or the plant bio-stimulant both the surface coverage and the total dry weight of the three types of grass improved. A surface coverage of 100% was obtained with both SOS and RPR, and 88% with Shadow, when the seed supports of the invention were applied. Conventionally sown grass reached lower surface coverages of between 51% and 65%.

## Claims

1. Seed support comprising a self-supporting film for supporting one or more seeds, said self-supporting film comprising:
a) between about 85% and about 99.5% of a first water-based adhesive by weight of the film; and
b) between about 0.5% and about 15% water by weight of the film,
wherein the seed support supports one or more plant seeds by adhesion of said one or more plant seeds to a first major surface of the self-supporting film; and
wherein the self-supporting film is provided with a coating at the first major surface of the self-supporting film, such that the one or more plant seeds supported at said first major surface of the self-supporting film are wholly enclosed by said self-supporting film and said coating, said coating comprising:
a) between about 85% and about 99.5% of a second water-based adhesive by weight of the coating; and
b) between about 0.5% and about 15% water by weight of the coating.

2. Seed support according to claim 1, wherein the one or more plant seeds are partially or wholly embedded in the film.

3. Seed support according to any of the claims 1 or 2, wherein the first water-based adhesive of the self-supporting film and/or the second water-based adhesive of the coating is a biodegradable water-based adhesive.

4. Seed support according to any of the claims 1 to 3, wherein the first water-based adhesive of the self-supporting film and/or the second water-based adhesive of the coating is selected from a polyvinyl alcohol emulsion, said polyvinyl alcohol emulsion comprising one grade of polyvinyl alcohol or a mixture of grades of polyvinyl alcohol and/or said polyvinyl alcohol emulsion comprising one or more further water-based adhesives such as vinyl acetate, preferably the first water-based adhesive of the self-supporting film and the second water-based adhesive of the coating are both a mixture of vinyl acetate and polyvinyl alcohol.

5. Seed support according to any of the claims 1 to 4, wherein the self-supporting film and/or the coating comprises between 0% and about 10% of at least one additive by weight of the self-supporting film and/or by weight of the coating.

6. Seed support according to claim 5, wherein the at least one additive is a plant growth additive, soil-adjustment additive, extender and/or seed protection additive selected from: bio-stimulants such as humic acid, fulvic acid, nitrogen containing compounds, inorganic compounds, seaweed extracts, botanicals, chitosan, biopolymers, fungi, bacteria, organic or synthetic fertilizers, biocontrol agents, pesticides, *i.e.* herbicides, fungicides and insecticides, a pH-modifier, a UV-stabiliser, an absorbent polymer such as silica, bentonite and super absorbing polymer, calcium carbonate, talcum, color dyes.

7. Seed support according to any of the claims 1 to 6, wherein the self-supporting film, or the self-supporting film and the coating together, have a thickness of between about 20 micrometer and about 500 micrometer, preferably between about 25 micrometer and about 100 micrometer, more preferably between about 30 micrometer and about 50 micrometer.

8. Seed support according to any of the claims 1 to 7, wherein the one or more seeds supported by the self-supporting film is grass seed or vegetable seed.

9. Seed support according to any of the claims 1 to 8, wherein the surface density of the seeds is on average between about 50 and 200.00 seeds per square meter of the self-supporting film, or wherein the surface density of the seeds is on average between about 5 and about 60 gram of seeds per square meter of the self-supporting film.

10. Seed support according to any of the claims 1 to 9, wherein the first water-based adhesive and/or the second water-based adhesive is a mixture of polyvinyl alcohol and a further water-based adhesive, wherein the self-supporting film supports grass seeds at a seed density of about 13.000 seeds per square meter, and wherein the self-supporting film or the self-supporting film with the coating together has a thickness of between about 30 micrometer and about 60 micrometer.

11. Seed support according to any of the claims 1 to 10, further comprising a porous carrier layer adhered to the second major surface of the self-supporting film opposite to the first major surface of the self-supporting film with adhered seed(s) thereto, said porous carrier layer preferably selected from spunlace or needle-punched nonwoven based on viscose, cotton or polylactic acid fiber, or a mixture thereof.

12. Seed support according to any of the claims 1 to 11, wherein the seed support is wrappable in a roll.

13. Method for sowing a plant seed, comprising the consecutive steps of:
a) providing a seed support of any of the claims 1 to 12;
b) laying the seed support on top of a prepared soil surface with either the first major surface or the second major surface of the self-supporting film of the seed support facing the soil;
c) wetting the seed support with water such that the seed support adheres to the soil surface; and
d) optionally covering the seed support with a layer of soil.

14. Method for sowing a plant seed, comprising the consecutive steps of:
a) providing a seed support of any of the claims 1 to 12;
b) wetting with water a prepared soil surface selected for sowing the plant seed;
c) laying the seed support on top of the wetted soil surface with either the first major surface or the second major surface of the self-supporting film of the seed support facing the soil, such that the seed support adheres to the wetted soil surface;
d) optionally wetting the seed support with water; and
e) covering the seed support with a layer of soil.

## Patentansprüche

1. Saatgutträger, umfassend einen selbsttragenden Film zum Tragen eines oder mehrerer Samen, der selbsttragende Film umfassend:
a) zwischen etwa 85 Gew.-% und etwa 99,5 Gew.-% eines ersten Klebstoffs auf Wasserbasis des Films; und
b) zwischen etwa 0,5 Gew.-% und etwa 15 Gew.-% Wasser des Films,
wobei der Saatgutträger einen oder mehrere Pflanzensamen durch Anhaften des einen oder der mehreren Pflanzensamen an einer ersten Hauptoberfläche des selbsttragenden Films trägt; und
wobei der selbsttragende Film an der ersten Hauptoberfläche des selbsttragenden Films mit einer Beschichtung versehen ist, so dass der eine oder die mehreren Pflanzensamen, die an der ersten Hauptoberfläche des selbsttragenden Films getragen werden, vollständig von dem selbsttragenden Film und der Beschichtung umschlossen sind, wobei die Beschichtung umfasst:
a) zwischen etwa 85 Gew.-% und etwa 99,5 Gew.-% eines zweiten Klebstoffs auf Wasserbasis der Beschichtung; und
b) zwischen etwa 0,5 Gew.-% und etwa 15 Gew.-% Wasser der Beschichtung.

2. Saatgutträger nach Anspruch 1, wobei der eine oder die mehreren Pflanzensamen teilweise oder vollständig in den Film eingebettet sind.

3. Saatgutträger nach einem der Ansprüche 1 oder 2, wobei der erste Klebstoff auf Wasserbasis des selbsttragenden Films und/oder der zweite Klebstoff auf Wasserbasis der Beschichtung ein biologisch abbaubarer Klebstoff auf Wasserbasis ist.

4. Saatgutträger nach einem der Ansprüche 1 bis 3, wobei der erste Klebstoff auf Wasserbasis des selbsttragenden Films und/oder der zweite Klebstoff auf Wasserbasis der Beschichtung ausgewählt ist aus einer Polyvinylalkoholemulsion, wobei die Polyvinylalkoholemulsion eine Sorte Polyvinylalkohol oder eine Mischung aus Sorten von Polyvinylalkohol umfasst und/oder wobei die Polyvinylalkoholemulsion einen oder mehrere weitere Klebstoffe auf Wasserbasis wie Vinylacetat umfasst, wobei der erste Klebstoff auf Wasserbasis des selbsttragenden Films und der zweite Klebstoff auf Wasserbasis der Beschichtung vorzugsweise sowohl eine Mischung aus Vinylacetat als auch aus Polyvinylalkohol sind.

5. Saatgutträger nach einem der Ansprüche 1 bis 4, wobei der selbsttragende Film und/oder die Beschichtung zwischen 0 Gew-% und etwa 10 Gew.-% mindestens eines Additivs des selbsttragenden Films und/oder der Beschichtung umfasst.

6. Saatgutträger nach Anspruch 5, wobei das mindestens eine Additiv ein Pflanzenwachstumsadditiv, ein Bodenanpassungsadditiv, ein Extender und/oder ein Samenschutzadditiv ist, ausgewählt aus: Biostimulanzien wie Huminsäure, Fulvinsäure, stickstoffhaltigen Verbindungen, anorganischen Verbindungen, Algenextrakten, Pflanzenstoffen, Chitosan, Biopolymeren, Pilzen, Bakterien, organischen oder synthetischen Düngemitteln, Biokontrollmitteln, Pestiziden, d. h. Herbiziden, Fungiziden und Insektiziden, einem pH-Wert-Modifikator, einem UV-Stabilisator, einem absorbierenden Polymer wie Siliciumdioxid, Bentonit und superabsorbierendem Polymer, Calciumcarbonat, Talkum, Farbstoffen.

7. Saatgutträger nach einem der Ansprüche 1 bis 6, wobei der selbsttragende Film oder der selbsttragende Film und die Beschichtung zusammen eine Dicke zwischen etwa 20 Mikrometer und etwa 500 Mikrometer aufweisen, vorzugsweise zwischen etwa 25 Mikrometer und etwa 100 Mikrometer, bevorzugter zwischen etwa 30 Mikrometer und etwa 50 Mikrometer.

8. Saatgutträger nach einem der Ansprüche 1 bis 7, wobei der eine oder die mehreren Samen, die von dem selbsttragenden Film getragen werden, Grassamen oder Gemüsesamen sind.

9. Saatgutträger nach einem der Ansprüche 1 bis 8, wobei die Oberflächendichte der Samen im Durchschnitt zwischen etwa 50 und 200,00 Samen pro Quadratmeter des selbsttragenden Films liegt oder wobei die Oberflächendichte der Samen im Durchschnitt etwa zwischen 5 und etwa 60 Gramm Samen pro Quadratmeter des selbsttragenden Films liegt.

10. Saatgutträger nach einem der Ansprüche 1 bis 9, wobei der erste Klebstoff auf Wasserbasis und/oder der zweite Klebstoff auf Wasserbasis eine Mischung aus Polyvinylalkohol und einem weiteren Klebstoff auf Wasserbasis ist, wobei der selbsttragende Film Grassamen mit einer Samendichte von ungefähr 13.000 Samen pro Quadratmeter trägt, wobei der selbsttragende Film oder der selbsttragende Film mit der Beschichtung zusammen eine Dicke zwischen etwa 30 Mikrometer und etwa 60 Mikrometer aufweist.

11. Saatgutträger nach einem der Ansprüche 1 bis 10, ferner umfassend eine poröse Trägerschicht, die an der zweiten Hauptoberfläche des selbsttragenden Films gegenüber der ersten Hauptoberfläche des selbsttragenden Films mit daran haftendem/n Samen haftet; wobei die poröse Trägerschicht vorzugsweise aus Spinnvlies oder Nadelvlies auf der Basis von Viskose, Baumwolle oder Polymilchsäurefaser oder einer Mischung davon ausgewählt ist.

12. Saatgutträger nach einem der Ansprüche 1 bis 11, wobei der Saatgutträger zu einer Rolle aufwickelbar ist.

13. Verfahren zur Aussaat eines Pflanzensamens, umfassend die aufeinanderfolgenden Schritte von:
a) Bereitstellen eines Saatgutträgers nach einem der Ansprüche 1 bis 12;
b) Auflegen des Saatgutträgers auf eine vorbereitete Bodenoberfläche, wobei entweder die erste Hauptoberfläche oder die zweite Hauptoberfläche des selbsttragenden Films des Saatgutträgers dem Boden zugewandt ist;
c) Benetzen des Saatgutträgers mit Wasser, so dass der Saatgutträger an der Bodenoberfläche haftet; und
d) optionales Bedecken des Saatgutträgers mit einer Erdschicht.

14. Verfahren zur Aussaat eines Pflanzensamens, umfassend die aufeinanderfolgenden Schritte von:
a) Bereitstellen eines Saatgutträgers nach einem der Ansprüche 1 bis 12;
b) Benetzen einer vorbereiteten Bodenoberfläche, die zur Aussaat des Pflanzensamens ausgewählt wurde, mit Wasser;
c) Auflegen des Saatgutträgers auf die benetzte Bodenoberfläche, wobei entweder die erste Hauptoberfläche oder die zweite Hauptoberfläche des selbsttragenden Films des Saatgutträgers dem Boden zugewandt ist, so dass der Saatgutträger an der benetzten Bodenoberfläche haftet;
d) optionales Benetzen des Saatgutträgers mit Wasser; und
e) Bedecken des Saatgutträgers mit einer Erdschicht.

## Revendications

1. Support de semence comprenant un film autoportant pour supporter une ou plusieurs semences, ledit film autoportant comprenant :
a) entre environ 85 % et environ 99,5 % d'un premier adhésif à base d'eau en poids du film ; et
b) entre environ 0,5 % et environ 15 % d'eau en poids du film,
le support de semence supportant une ou plusieurs semences de plantes par adhérence de ladite ou desdites semences de plantes à une première grande surface du film autoportant ; et
dans lequel le film autoportant est pourvu d'un revêtement sur la première grande surface du film autoportant, de telle sorte que la ou les semences de plantes supportées sur la première grande surface du film autoportant sont entièrement enfermées par ledit film autoportant et ledit revêtement, ledit revêtement comprenant :
a) entre environ 85 % et environ 99,5 % d'un deuxième adhésif à base d'eau par poids du revêtement ; et
b) entre environ 0,5 % et environ 15 % d'eau en poids du revêtement.

2. Support de semence selon la revendication 1, dans lequel la ou les semences de plantes sont partiellement ou entièrement noyées dans le film.

3. Support de semence selon l'une quelconque des revendications 1 ou 2, dans lequel le premier adhésif à base d'eau du film autoportant et/ou le deuxième adhésif à base d'eau du revêtement sont des adhésifs à base d'eau biodégradables.

4. Support de semence selon l'une quelconque des revendications 1 à 3, dans lequel le premier adhésif à base d'eau du film autoportant et/ou le deuxième adhésif à base d'eau du revêtement sont sélectionnés à partir d'une émulsion de poly(alcool de vinyle), ladite émulsion de poly(alcool de vinyle) comprenant une qualité de poly(alcool de vinyle) ou un mélange de qualités de poly(alcool de vinyle) et/ou ladite émulsion de poly(alcool de vinyle) comprenant un ou plusieurs adhésifs à base d'eau tels que l'acétate de vinyle, de préférence le premier adhésif à base d'eau du film autoportant et le deuxième adhésif à base d'eau du revêtement sont tous deux un mélange d'acétate de vinyle et de poly(alcool de vinyle).

5. Support de semence selon l'une quelconque des revendications 1 à 4, dans lequel le film autoportant et/ou le revêtement comprennent entre 0 % et environ 10 % d'au moins un additif en poids du film autoportant et/ou en poids du revêtement.

6. Support de semence selon la revendication 5, dans lequel le ou les additifs sont un additif de croissance des plantes, un additif d'ajustement du sol, un additif de charge et/ou de protection des semences sélectionné entre : des bio-stimulants tels que l'acide humique, l'acide fulvique, des composés contenant de l'azote, des composés inorganiques, des extraits d'algues, des éléments botaniques, du chitosan, des biopolymères, des champignons, des bactéries, des engrais organiques ou synthétiques, des agents de biocontrôle, des pesticides, *i.e.* herbicides, fongicides et insecticides, un régulateur de pH, un agent anti-UV, un polymère absorbant tel que : silice, bentonite et polymère super-absorbant, carbonate de calcium, talc, colorants.

7. Support de semence selon l'une quelconque des revendications 1 à 6, dans lequel le film autoportant ou le film autoportant et le revêtement ensemble ont une épaisseur d'environ 20 micromètres à environ 500 micromètres, de préférence d'environ 25 micromètres à environ 100 micromètres, plus préférablement d'environ 30 micromètres à environ 50 micromètres.

8. Support de semence selon l'une quelconque des revendications 1 à 7, dans lequel la ou les semences supportées par le film autoportant sont une semence de graminées ou une semence potagère.

9. Support de semence selon l'une quelconque des revendications 1 à 8, dans lequel la densité de surface des semences est en moyenne comprise entre 50 et 200,00 semences par mètre carré du film autoportant, ou dans lequel la densité de surface des semences est en moyenne comprise entre environ 5 et environ 60 grammes de semences par mètre carré du film autoportant.

10. Support de semence selon l'une quelconque des revendications 1 à 9, dans lequel le premier adhésif à base d'eau et/ou le deuxième adhésif à base d'eau sont un mélange de poly(alcool de vinyle) et d'un autre adhésif à base d'eau, dans lequel le film autoportant supporte des semences de graminées à une densité de semences d'environ 13 000 semences par mètre carré, et dans lequel le film autoportant ou le film autoportant avec le revêtement ont une épaisseur d'environ 30 micromètres à environ 60 micromètres.

11. Support de semence selon l'une quelconque des revendications 1 à 10, comprenant en outre une couche porteuse poreuse collée à la deuxième grande surface du film autoportant opposée à la première grande surface du film autoportant avec la ou les semences collées dessus, ladite couche porteuse poreuse étant sélectionnée de préférence entre un non-tissé hydrolié ou auguilleté sur base de viscose, coton ou fibre d'acide polylactique, ou un mélange de ceux-ci.

12. Support de semence selon l'une quelconque des revendications 1 à 11, le support de semence pouvant être enveloppé en un rouleau.

13. Procédé pour semer une semence de plante, comprenant les étapes consécutives de :
a) fourniture d'un support de semence selon l'une quelconque des revendications 1 à 12;
b) disposition du support de semence sur une surface du sol préparée, la première grande surface ou la deuxième grande surface du film autoportant du support de semence faisant face au sol ;
c) mouillage du support de semence avec de l'eau de telle sorte que le support de semence adhère à la surface du sol ; et
d) optionnellement, recouvrement du support de semence avec une couche de sol.

14. Procédé pour semer une semence de plante, comprenant les étapes consécutives de :
a) fourniture d'un support de semence selon l'une quelconque des revendications 1 à 12;
b) mouillage avec de l'eau d'une surface du sol préparée sélectionnée pour semer la semence de plante ;
c) disposition du support de semence sur la surface du sol mouillée, la première grande surface ou la deuxième grande surface du film autoportant du support de semence faisant face au sol, de sorte que le support de semence adhère à la surface du sol mouillée ;
d) optionnellement mouillage du support de semence avec de l'eau ; et
e) recouvrement du support de semence avec une couche de sol.
